# EUROPEAN PATENT SPECIFICATION

(11) **EP 3 574 185 B1**
(45) Date of publication and mention of the grant of the patent: **10.01.2024**
(21) Application number: 18702525.9
(22) Date of filing: 24.01.2018
(51) Int. Cl.: F01C 19/00, F01C 21/02, F04C 25/02, F04C 27/00, F16J 15/06

(54) **VACUUM PUMP WITH BIASED STATOR SEALS AND METHOD OF MANUFACTURE THEREOF**
VAKUUMPUMPE MIT VORGESPANNTEN STATORDICHTUNGEN UND VERFAHREN ZUR HERSTELLUNG DAVON
POMPE À VIDE À JOINTS DE STATOR SOLLICITÉS ET SON PROCÉDÉ DE FABRICATION

(30) Priority: 25.01.2017 GB 201701268
(43) Date of publication of application: 04.12.2019
(73) Proprietor: Edwards Limited, Burgess Hill, Sussex RH15 9TW (GB)
(72) Inventor: HOLBROOK, Alan Ernest Kinnaird, Burgess Hill Sussex RH15 9TW (GB); BEDWELL, David, Burgess Hill Sussex RH15 9TW (GB)
(74) Representative: Arnold, Emily Anne
(86) International application number: PCT/GB2018/050194
(87) International publication number: WO 2018/138489

(56) References cited:
- EP-A1- 2 107 280
- EP-A2- 2 926 009
- WO-A1-02/059507
- FR-A1- 2 574 517
- GB-A- 2 489 248
- GB-A- 2 512 095
- US-A- 5 674 060
- US-A1- 2003 098 548

## Description

### FIELD OF THE INVENTION

The field of the invention relates to pumps and in particular to seals for a stator of a vacuum pump.

### BACKGROUND

Some rotating machines have rotors machined directly onto the shaft requiring the stators to have a horizontal split line for mounting of the rotor. Such an arrangement means that a seal is required between the two stator half shells. Furthermore, head plates or end pieces are required at either end of the stator half shells and these too require a seal between the end pieces and the stator shells. The split line between the half shell stators reaches the seal between the head plates and stators at a so-called T-joint. It is difficult to provide an effective seal at this T-joint particularly where the pump assembly is operating across a large temperature range.

GB2489248 discloses a multi-stage vacuum pump with a stator formed of two half shells and with a longitudinal seal or gasket between the two half shells. The pump has two end pieces with an annular seal, the gasket has end portions which abut against the annular seal and the stator has formations that resist the axial movement of the gasket away from the annular seal. In some embodiments the end surface of the seal has at least a partly circular cross section for mating with the annular seal which is an O-ring. Another similar multi-stage vacuum pump is disclosed in EP 2 926 009 B1.

### SUMMARY

A first aspect of the present invention provides a vacuum pump according to claim 1.

It has been observed that gas from either the lower vacuum end of the pump or from the purge protection grooves can travel down the gasket groove to the higher vacuum end and corrupt the pump's inlet pressure. The inventors of the present invention recognised this problem that arises due to the groove housing the longitudinal seal being wider than the longitudinal seal, in order to allow for expansion of the seal due to thermal effects and compression. Due to this increased width the location of the seal within the groove is not clearly defined and where the seal does not lie against an inner surface of the groove then there is a gap or passage along the groove between one end of the pump and the other. This provides a potential leakage path for the gas.

The inventors of the present invention have addressed this problem by providing a deviation on the longitudinal seal, the deviation being configured to abut against an outer surface of the groove away from the pumping chamber(s) biasing the seal towards the inner surface of the groove closest to the pumping chamber. In this way the potential leakage path along the groove is blocked by the presence of the seal.

By using a deviation in the longitudinal seal, the elastomeric properties of the seal provide the biasing force and the desired locating of the seal is achieved without any modifications to the stator or the groove in the stator. Were the biasing to be provided by bumps in the housing instead, not only would this require modification of the housing, but such bumps would constrict the gasket and might cause over compression at this point and could lead to pinching of the gasket during assembly.

In some embodiments, said longitudinal seal has a substantially constant cross section throughout said deviation.

Although the deviation can be formed in a number of ways, where it is formed to have a substantially constant cross section then when the seal expands due to temperature increases, the expansion will be substantially the same along the deviation and pinch points due to increased expansion at points with increased cross section are avoided or at least reduced. A cross section that is substantially constant is viewed as one that varies by less than 10% in each of a lateral or longitudinal direction.

In some embodiments, said longitudinal seal has a substantially constant cross section along a whole length of said longitudinal seal.

By providing a longitudinal seal with a substantially constant width and height, then the effects of increased temperature on the gasket will be substantially the same along the length of the gasket and where the groove also has a constant cross section, the gasket will have the same freedom to spread and expand in all locations, which avoids overcompression of the gasket at particular points.

Furthermore, as it is desirable that the groove is configured so as to provide a certain degree of compression and a certain amount of lateral movement that allows for a given thermal expansion, having a seal with a constant cross sectional area makes the selection of groove cross section to meet the desired compression and expansion requirements easier to determine, and as there will not be variations in these requirements along the length of the seal and therefore of the groove, the groove is much easier to machine.

In some embodiments, said deviation comprises a returning bend away from and back towards said longitudinal axis.

Providing the deviation in the form of a returning bend, allows the deviation to be formed with a constant cross section, with the associated benefits. Furthermore, such a design allows for some axial movement in this portion of the seal which helps prevent overstretching of the seal which could lead to the seal thinning and a potential failure point.

In other embodiments, said deviation comprises a protrusion extending from said longitudinal seal.

An alternative way of implementing the biasing of the seal towards the inner surface of the groove is to provide it with a protrusion or pip which will contact an outer surface of the groove pushing the opposing surface of the seal towards the inner surface of the groove. A pip is a simple feature to add to a seal and provides the required biasing. It has the disadvantage of providing a potential pinch point, but where it is relatively small then this may not be a problem.

In some embodiments there are a plurality of deviations on said longitudinal seal.

In order to provide a consistent biasing force along the length of the seal, a number of deviations may be present.

In other embodiments, there may only be one towards a middle of the seal, or two, one towards either end.

In some embodiments, said groove has a substantially constant cross section along its length.

Where the longitudinal seal has a substantially constant cross section, then the groove may also be machined to have a constant rectangular cross section. This allows for ease of manufacture, the groove being able to be machined with one pass of a flat ended tool. It also provides a consistent fit for the seal with similar compression, clearances and play along its length. In this regard, the groove will have a smaller height than the seal so that the seal is compressed when the stator half shells are held together. It will also have a larger width than the longitudinal seal to provide freedom for some lateral movement, avoid pinch points and allow the seal to expand as temperature increases.

In some embodiments, said longitudinal seal further comprises two outwardly extending portions on either side of, and symmetrically about said longitudinal axis, said groove comprising axial alignment faces for abutting with at least a portion of a surface of said two outwardly extending portions, said outwardly extending portions acting with said axial alignment faces to bias at least a portion of said longitudinal seal towards a predetermined axial position.

The longitudinal seal may also comprise outwardly extending portions that extend out from the longitudinal axis in a symmetrical way and abut with axial alignment faces. The symmetrical outwardly extending portions provide equal forces in opposite lateral directions helping centring and reducing lateral bias in the axial alignment. Furthermore, they hold the seal in place in a predetermined axial position.

In some embodiments, said longitudinal seal comprises two sets of said two outwardly extending portions towards either end of said seal, and said groove comprises corresponding axial alignment faces towards either end of said stator half shell, said longitudinal seal being mounted within said groove such that it is under tension between said axial alignment faces.

The longitudinal seal may be mounted under some tension between the axial alignment faces, this helps to hold the seal securely in place within the groove during assembly of the pump.

In some embodiments, said outwardly extending portions are operable to flex to allow for axial expansion and compression of said longitudinal seal.

The provision of outwardly extending portions holds the seal in position while allowing some axial flexion. In this way longitudinal expansion and compression can be compensated for by flexing of these portions, reducing the variations in tension experienced by the longitudinal seal that would otherwise be caused by the expansion and compression. This helps prevent over tensioning of the seal which could lead to thinning and loss of effectiveness.

In some embodiments, a cross section of each of said outwardly extending portions is substantially the same as each other and substantially the same as a cross section of at least 90 % of a longitudinal portion of said longitudinal seal.

Again where the groove is to have a substantially constant cross section with the attendant benefits and where pinch points are to be avoided or reduced then a constant cross section along much of the length of the longitudinal seal is desirable. The use of outwardly extending portions for axial positioning means that a constant cross section of both seal and groove can be used in the design to provide the desired axial positioning of the seal.

In some embodiments, said outwardly extending portions each comprise protrusions at corresponding positions arranged for contact with said axial alignment faces of said groove.

The use of protrusions or pips on the outwardly extending portions or arms increases the amount by which the arms can flex and also provides a predetermined position for supporting the seal on either side of the longitudinal axis aiding centring of the seal.

The provision of pips introduces the possibility of pinch points, such that in some embodiments, the increase in cross sectional area of the seal at the pips or protrusions is less than 30% of the average cross sectional area of the seal and preferably less than 20%.

According to the invention, said two outwardly extending portions form a first portion of a loop.

In some embodiments, said loop is mounted within a groove comprising two laterally extending sides substantially perpendicular to said longitudinal axis and two longitudinally extending sides substantially parallel to said longitudinal axis. A loop mounted within a suitably shaped groove can help with holding the seal in position during assembly and with centring of the seal.

In some embodiments, said vacuum pump further comprises: end pieces mounted at either end of said two half shell stators; annular seals for sealing between said end pieces and said stator half shells; wherein said longitudinal seal extends at least up to each end of said stator half shells, said longitudinal seal comprising a flat end surfaces for contact with said annular seals.

A particularly difficult point to seal in a pump with half stator shells is the point of contact between the longitudinal seal between the stator half shells and the annular seal that seals between the stator and the end pieces. For this seal to be effective the longitudinal seal must consistently contact the annular seal across at least a minimum surface area and have a minimum contact pressure. One potential problem arises where the longitudinal seal is not held in place at the end of the stator half shells or does not extend this far. To address this, in preferred embodiments the longitudinal seal extends at least up to each end of the stator half shells that contacts the end piece.

Furthermore, in some embodiments, when not under compression the longitudinal seal has a substantially flat end surface that acts as the contact surface with the annular seal.

In some embodiments, said loop comprises an extended portion extending from said loop, an end of said extended portion forming said flat end surface of said longitudinal seal.

In order to hold the longitudinal seal in position so that the end portion extends up to and/or beyond the stator end surfaces, the end portion may comprise an extended potion at the end of a loop. The loop is held in a known position by axial alignment surfaces towards an end of the stator shells. Thus, the position of the extended portion is a known position determined by the position of the axial alignment surfaces and the loop. Furthermore, the loop provides axial alignment or centring of the longitudinal seal and can help hold the seal in the correct position for accurately mating with the annular seal. In this regard as noted previously the width of the groove in which the longitudinal seal is mounted is wider than the seal allowing for some lateral movement and expansion. If the seal is at one side of the groove it may not align with the annular seal and the contact area may be small resulting in an inadequate seal. Providing accurate centring of the end portion addresses this issue and provides a consistent effective seal.

In some embodiments, said longitudinal seal extends beyond said stator half shells when said longitudinal seal is not under compression, said end surface being aligned with an end surface of said stator half shells during assembly of said vacuum pump.

It may be preferable for the end of the seal to extend beyond the stator half shells during assembly and for it to be pushed back into alignment with the end surface, so that it is held under compression and aligned with this surface. This provides a good contact surface in a known position for contact with the annular seal.

In some embodiments, said portion of said loop comprising said extended portion is configured to bend towards a centre of said pump in response to said extended portion being aligned with said end surface of said stator.

Where the extended portion is mounted on a loop then the axial movement required for alignment with the end surface is provided by bending of the loop and in particular, the lateral arms of the loop bending inwards towards a centre of the pump.

According to the invention, said longitudinal seal comprises biasing means for biasing said end portion of said longitudinal seal towards a centre position of said groove.

As noted previously it is desirable for the end portion to be centred within the groove and this may be provided by biasing means. Features such as pips on the gasket may be used as said biasing means, with equal sized pips on either side. Alternatviley , pips on the groove could be used as the biasing means instead of pips on the seal in some embodiments.

Preferably, the biasing means comprises the arms of the loop and the end portion is mounted on a loop.

In some embodiments, said biasing means comprise deviations in said loop such that said longitudinal seal at said deviations contacts an outer surface of said groove, said deviations being arranged symmetrically about a longitudinal axis on opposite sides of said loop and operable to exert opposing biasing forces on said end portion of said longitudinal seal.

Axial alignment or centring of the seal may be enhanced by deviations in the loop, the deviations being symmetrically arranged about a longitudinal axis so as to provide substantially equal biasing forces in opposite directions to centre the seal.

The deviations may take a number of forms such as a bowing of said opposite sides of the loop or protrusions on the loop.

A bow or barrel type shape of the loop provides deviations in the arms of the loops that are substantially parallel to the longitudinal axis such that they contact an outer surface of the groove and exert an inward force towards the centre of the loop. In this way the elastic properties of the seal are used for biasing of the seal towards the desired centred position and where bowing of the arms is used the cross section of the seal is maintained, reducing the likelihood of pinch points. Furthermore, the symmetric arrangement helps provide substantially equal opposing forces leading to improved centring.

In some embodiments, said annular seal is mounted in a groove with a rectangular cross section.

The groove housing the annular seal may have a rectangular cross section. This is easy to machine requiring a flat ended tool which therefore experiences wear substantially equally across its whole end surface increasing its useful life. This rectangular cross section does allow for some lateral movement of the annular seal, but with suitable choice of groove width and with alignment of the longitudinal seal with the centre of its groove, a suitable interface area between the two seals can be consistently achieved. A width where the O-ring under compression substantially fills the groove may be selected.

In some embodiments, said groove, housing said longitudinal seal, is displaced towards said pumping chamber towards either end of said stator half shell.

As the seal is biased towards the pumping chamber rather than lying centrally in the groove along much of its length, then in order to allow the end to be centred suitably it may be advantageous for the groove to be displaced towards each end close to the axial alignment faces, so that the seal is no longer pushed against an inner surface of the groove at this point.

In some embodiments said groove is displaced by half a difference in width of said longitudinal seal and said groove.

In order for the seal that is lying at one side of the groove to be centred it may be advantageous to displace the groove by half the gap between the gasket and the groove so that the longitudinal seal, if it continues along the same longitudinal axis, will be lying in the centre of the groove in the displaced portion of the groove. Doing this prior to the axial alignment faces allows the axial alignment forces applied equally from both sides of the longitudinal axis to centre the seal within the groove.

In some embodiments said longitudinal seal and said annular seal are formed of an elastomeric material.

A second aspect of the present invention provides a method of manufacturing a vacuum pump according to a first aspect, comprising: mounting longitudinal seals in corresponding grooves in longitudinal contact face of a lower half shell stator; placing upper half shell stator on said lower half shell stator at a distance therefrom; using a tool with a flat end to push a correspondingly flat end of said longitudinal seal such that it extends to a groove of an annular seal; attaching said upper and lower stator shells together such that said longitudinal seal is held in position; removing said tool; mounting annular seals in grooves in end faces; and attaching end pieces to either end of said two half shell stators such that said annular seals contact said end seals of said longitudinal seal.

Although, the end surface of the longitudinal seal may have a contoured shape for matching with an O-ring, in some embodiments it comprises a flat surface, a flat surface is easier to manufacture and easier to manipulate. In this regard, when assembling the pump assembly both ends of a flat ended longitudinal seal may be aligned with the edge of the annular seal groove using a tool with a flat end surface. This allows both this procedure and the manufacture of the tool to be simpler. Furthermore, the flat surface of the longitudinal seal provides a surface on which the O-ring can be compressed and can mate with and seal effectively.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

It should be noted that there are various features of the longitudinal seal which provide particular benefits and seals are envisaged that have one or more of these features.

Thus, the features for biasing towards the pump chamber can be used in conjunction with or independently of the features for centring an end of the seal, and the features for axial flexibility. Similarly at least some of the features for axial flexibility and those for centring the end of the longitudinal seal such as the bow-shaped loop could be used in longitudinal seals where there is no biasing of the seal towards the pumping chamber side of the groove.

### BRIEF DESCRIPTION OF THE DRAWINGS

Embodiments of the present invention will now be described further, with reference to the accompanying drawings, in which:
Figure 1 shows a pump assembly with a horizontal split line;
Figure 2 shows an isometric view of a pump assembly having seals according to an embodiment;
Figure 3a and 3b show a cross section through the interface between the annular and longitudinal seals;
Figure 4 shows the profile of a longitudinal seal according to an embodiment.

### DESCRIPTION OF THE EMBODIMENTS

Before discussing the embodiments in any more detail, first an overview will be provided.

A longitudinal seal for sealing between two half shell stators is disclosed. The longitudinal seal has a deviation from a longitudinal axis the deviation contacting one surface of the groove within which the seal is mounted and biasing the longitudinal seal towards the opposing surface of the groove and thereby holding it in a position.

In some embodiments the deviation is a returning bend in the longitudinal seal which pushes against an outer surface of the groove biasing the longitudinal seal towards the other inner surface of the groove that is towards the pumping chamber. In other embodiments the longitudinal deviation comprises a protrusion or pip in the longitudinal seal.

Longitudinal seals within grooves of vacuum pumps are narrower than the width of the groove to allow for expansion when the pump heats up during use. However, this can result in a passage along the groove on the pumping chamber side which can lead to leakage, this can be a particular problem in a multiple vacuum chamber pump, that is a multi-stage pump, with leakage occurring between the vacuum chambers of each pumping stages. It is therefore advantageous to bias the longitudinal seal towards the pumping chamber(s) and inhibit such a channel forming.

Additionally and or alternatively the longitudinal seal may have further deviations in the longitudinal axis that bias an end of the longitudinal seal towards a particular central position. In this regard, the longitudinal seal may mate at either end with an annular seal that provides a seal between the end pieces and the stator of the pumping assembly. In order for this mating of surfaces to be reliable and effective, given the width of the grooves holding the seals and the lateral movement allowed to the seals, it is advantageous if some biasing of the longitudinal seal towards a central position can be achieved.

In some cases, each end of the longitudinal seal may have a loop section and both longitudinal sides of the loop may be bent outwardly to be biased against the groove housing them, thereby providing substantially equal but opposing forces exerted on either side of the longitudinal seal such that an end protrusion protruding from the loop is biased towards the centre of the groove.

Furthermore, the transverse portions of the loop are adapted to contact axial alignment surfaces to hold the seal axially in position. Where the loops are on either end then the seal is mounted under tension between these axial alignment faces towards either end of the stator.

In cases where the longitudinal seal is biased towards the inner surface of the groove for much of the longitudinal seal length then the groove may be axially displaced towards either end adjacent to the loop such that the longitudinal seal is towards the centre of the groove at the junction with the loop. This allows lateral movement of the longitudinal seal at this point.

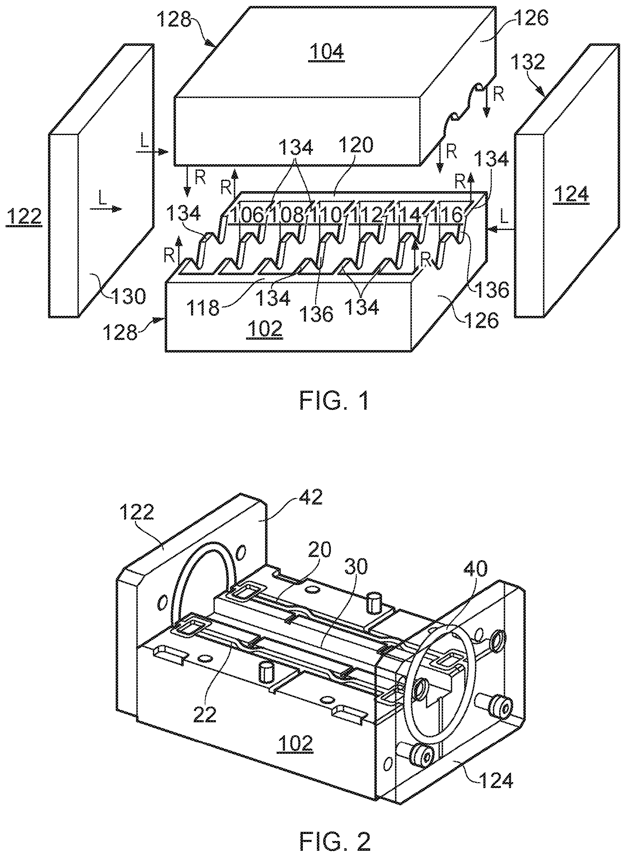

Figure 1 shows schematically a multiple chamber rotary pump assembly, with two stator half shells and end pieces. The pump assembly is formed of two stator half shells 104 and 102 between which a rotor (not shown) is mounted. The two shells are fixed together to form the pump chambers. Each of the chambers 106, 108, 110, 112, 114 & 116 are separated by pump chamber walls 134. End pieces 122 and 124 are mounted on the half shells of the stators to complete the pump assembly.

Figure 2 shows an isometric view of the seals that are arranged between the stator half shells and between the end faces. In this embodiment, there are longitudinal seals 20 and 22 on either side of pumping chamber 30. There are also O-ring seals 40 and 42 between the end pieces and the stator half shells.

In this embodiment, the annular seal 40, 42 is a standard O-ring and is mounted in a rectangular groove of a constant cross section that can be machined using a plain cylindrical tool. An effective seal between the longitudinal seal 20, 22 and the O-rings 40, 42 can be difficult to maintain. In particular, longitudinal seals 20, 22 are mounted within a groove that is wider that the seal to provide freedom for some lateral movement and the ability for the gasket to expand under compression and under an increased stator temperature. However, this provides a degree of freedom for the end surface of the longitudinal seal which means that its position is not exactly determined and may not mate accurately with the O-ring seal. Furthermore, the O-ring itself will have some degree of lateral movement.

The seal arrangement and interface is termed a T-seal. The O-ring is housed in a plain rectangular section groove. This allows the O-ring to float sideways. It is important to ensure good alignment between the longitudinal gasket seal and the annular O-ring. Features on the sides of the end region of the gasket centre it and deliver the required alignment relative to the O-ring. Biasing features such as pips on the gasket may be used, although pips on the groove could replace the pip on the housing in some embodiments.

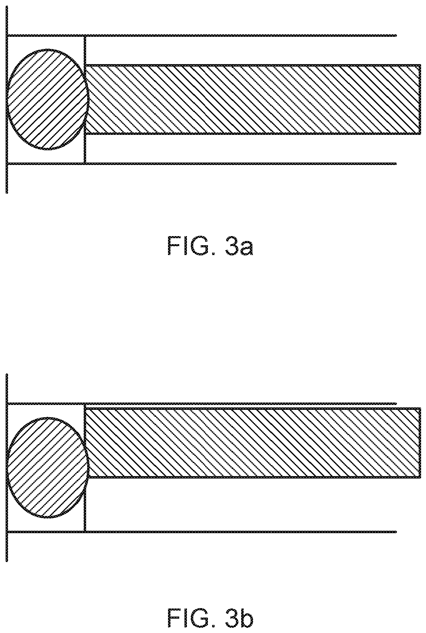

Figure 3 schematically shows how the two seals in a prior art pump may align or may not align and the difference in the interface surface that such differences in alignment cause. In particular figure 3a shows how when the longitudinal seal is centred the interface surface which provides the seal is quite large, whereas when the longitudinal seal is to one side of the groove the interface surface between the seals is much smaller.

One way of addressing the problems that arise when the longitudinal seal is not centred might be to have an end of the gasket that is shaped to cooperate with the shape of the O-ring such that the seal and O-ring are biased to a particular position. However a curved shape for the end of the gasket provides additional complexity to the manufacture of the gasket and to the alignment of the gasket with the end of the stator during assembly.

Thus, in preferred embodiments the end of the longitudinal gasket seal is flat and centring features are used to align the end of the gasket with the O-ring.

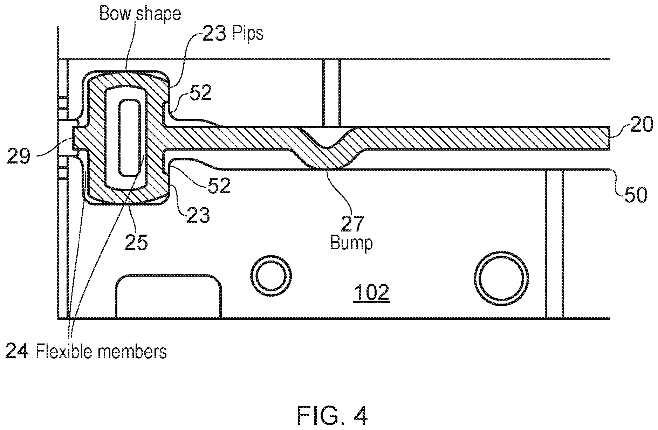

Figure 4 shows such centring features in more details, it also shows biasing means 27 for biasing the longitudinal seal 20 against the surface of groove 50 closest to the pumping chamber(s). As noted previously, the groove 50 may provide a leakage passage for gases between the low vacuum and high vacuum ends of a pump. Biasing the seal against the pumping chamber side of the groove blocks this passage. According to the invention, the biasing means is a deviation 27 in the seal, this contacts deviation 27 the outer surface of the groove to push the seal 30 against the inner surface. The advantages of a deviation are that it has a constant cross sectional area, and it also provides some axial flexibility.

With regard to the centring features, the gasket 20 comprises an end loop 25 which is within a groove 50 and has curved lateral arms that form a bow shape. Owing to the symmetrical nature of the loop the bow shape acts against the outer surface of the groove on either side of the loop, each side generating a force of substantially the same magnitude but in opposite directions, thereby centring the seal and in particular centring the end portion of the seal that extends from the loop and mates with the O-ring.

The bow shape of the loop preserves axial rigidity but allow lateral flexibility to ensure an interference fit is possible. The section/width of the longitudinal gasket seal is maintained in the bow shaped centering features to avoid excessive expansion at high temperatures. Space is provided inside the bow sides and straight members to provide freedom for spreading during compression and expansion at higher temperatures.

In addition to providing this centring feature the loop also provides some axial stability and axial flexibility. The axial stability is provided by the axial alignment faces 52 of the groove which form the outer surfaces of the arms extending from the longitudinal groove in either direction at the start of the loop. The loop portion of the seal contact the axial alignment faces and hold the longitudinal seal axially in position. The length of the groove between the axial alignment faces located towards each end of the stator is configured so that the longitudinal seal is mounted under a slight tension and is thus, held more securely in the groove. Axial flexibility is provided by the flexing of the lateral arms that allow some axial movement of the seal thereby inhibiting it becoming over tensioned with the corresponding thinning in the seal that this might trigger.

In the embodiment of Figure 4, the loop 25 has pips 23 on the outer surface which abut the axial alignment surface 52 of stator half shell. These pips 23 provide a known contact position for the loop with the axial alignment faces 52 which locate the gasket for axial tension. They are located towards an outer side of loop allowing for increased axial flexion to occur due to the bending of the portion of the loop between the pips 23. Further axial flexion is provided in this embodiment by the longitudinal deviation or bump 27 which also provides the biasing of the gasket against the inner surface of the groove. This bump can contract and expand to allow for the axial flexion.

Each end of the gasket comprises an end portion 29 extending from loop 25. This end portion 29 is aligned with the end of the stator half shells and contacts the O-ring. It is centred by the bow shape of the loop in this embodiment.

When the pump assembly is assembled the lower stator has two longitudinal seals (gaskets) mounted on either side of the pump within the grooves 50. They are mounted under tension against the axial alignment faces 52 at either end of the stator. The protruding end 29 is then held against the end of the stator half shell by a flat ended tool and the upper stator half shell is lowered on to the lower stator half shell and they are fixed together such that the gasket is held in place under compression. The end pieces 122, 124 which contain the O-ring seal 40, 42 can then be mounted against the stator end faces.

As can be seen the groove 50 is of a constant width and thus can be machined in one pass with one tool. This provides an advantage over grooves which contain pips to maintain the seal in place. Furthermore, the absence of these pips reduces the chances of there being pinch points for the gasket as it expands under compression and temperature changes.

The protrusion 29 is pushed back flush with the bottom or edge of the O-ring groove during assembly. This is possible due to the flexibility of loop 25 and in particular to the side arm of the loop which can flex in and out and provide this axial flexibility. The groove 50 deviates towards the pumping chamber as it nears the axial alignment faces 52. This deviation is provided so that the biasing of the gasket towards the pumping chamber(s) does not bias the gasket against the inner side of the groove close to its ends. Centring of the gasket within the groove allows for lateral movement of the gasket 20 towards the loop 25 in response to lateral forces. This helps in the centring of the end protrusion 29 when opposing lateral forces are applied from either side.

In summary the new gasket design uses a simplified geometry. The end regions have a 'one box' form that provides the required functions. The flat ended gasket interfaces to a standard round section O-ring.

Axial alignment of the gasket with the O-ring grooves is required to achieve a good quality seal. This centring is achieved by ensuring that when the gaskets are placed in the housing they protrude beyond the O-ring grooves and then by pushing the gaskets back to the O-ring grooves with bespoke tooling.

Axial flexibility is required in the ends of the gasket to provide a protruding end that can be pushed back. This flexibility is provided by the transverse member that supports the end sealing surface, see Figure 4.

Axial flexibility in the centre of the gasket helps ensure it is in tension and does not buckle. The gasket is stretched and located against the alignment faces 52, in some embodiments on the alignment pips 23. The flexibility is provided by the transverse flexible members 24 that supports the alignment pips 23. The bumps 27 in the central region of the gasket provide additional axial flexibility.

Although illustrative embodiments of the invention have been disclosed in detail herein, with reference to the accompanying drawings, it is understood that the invention is not limited to the precise embodiment and that various changes and modifications can be effected therein by one skilled in the art without departing from the scope of the invention as defined by the appended claims.

### REFERENCE SIGNS

20, 22 longitudinal seal
23 pips
24 flexible members
25 loop
27 deviation
30, 106, 108, 110, 112, 114 & 116 pump chambers
40, 42 O-ring seal
50 groove
52 axial alignment face
102, 104 stator half shell
120 contact surface between stator half shells
124, 126 mating end surface of stator half shells
130, 132 mating surface of end pieces
134 pump chamber walls

## Claims

1. A vacuum pump comprising:
two half shell stators (102, 104) components mounted together at longitudinal contact faces and defining one or more pumping chambers (30; 106, 108, 110, 112, 114, 116);
longitudinal seals (20, 22) for sealing between said longitudinal contact faces of said two half shell stators (102, 104) on either side of said pumping chamber (30; 106-116); wherein
said longitudinal seals (20, 22) are mounted within respective grooves (50) in at least one of said half shell stators (102, 104), said respective grooves (50) being wider than said longitudinal seal (20, 22) over at least a portion of said longitudinal seal (20, 22) allowing for some lateral movement, said longitudinal seal (20, 22) comprising a biasing means (27) for biasing at least a portion of said longitudinal seal (20, 22) towards an inner surface of the groove (50) closest to said vacuum pumping chamber (30; 106-116); and
**characterised in that**
said biasing means (27) comprises a deviation (27) of the longitudinal seal from an axis thereof, said deviation forming a bump (27) that abuts against an outer surface of the groove (50) opposite said inner surface; and **in that**
said longitudinal seal (20, 22) further comprises an end loop (25) having curved lateral arms that form a bow shape.

2. A vacuum pump according to claim 1, wherein the curved lateral arms comprise two outwardly extending portions on either side of, and symmetrically about said longitudinal axis, said groove (50) comprising axial alignment faces (52) for abutting with at least a portion of a surface of said two outwardly extending portions, said outwardly extending portions acting with said axial alignment faces (52) to bias at least a portion of said longitudinal seal (20, 22) towards a predetermined axial position.

3. A vacuum pump according to claim 2, wherein said longitudinal seal (20, 22) comprises two end loops (25) comprising outwardly extending portions towards either end of said seal (20, 22), and said groove (50) comprises corresponding axial alignment faces (52) towards either end of said stator half shell (102, 104), said longitudinal seal (20, 22) being mounted within said groove (50) such that it is under tension between said axial alignment faces (52).

4. A vacuum pump according to claims 2 or 3, wherein said outwardly extending portions are operable to flex to allow for axial expansion and compression of said longitudinal seal (20, 22).

5. A vacuum pump according to any one of claims 2 to 4, wherein a cross section of each of said outwardly extending portions is substantially the same as each other and substantially the same as a cross section of at least 90 % of a longitudinal portion of said longitudinal seal (20, 22).

6. A vacuum pump according to any one of claims 2 to 5, wherein said outwardly extending portions each comprise pips (23) at corresponding positions arranged for contact with said axial alignment faces (52) of said groove (50).

7. A vacuum pump according to any of claims 1 to 6, wherein said loop (25) is mounted within a groove (50) comprising two laterally extending sides substantially perpendicular to said longitudinal axis and two longitudinally extending sides substantially parallel to said longitudinal axis.

8. A vacuum pump according to any of claims 1 to 7, said vacuum pump further comprising:
end pieces (122, 124) mounted at either end of said two half shell stators (102, 104);
annular seals (40, 42) for sealing between said end pieces (122, 124) and said stator half shells (102, 104); wherein
said longitudinal seal (20, 22) extends at least up to each end of said stator half shells (102, 104), said longitudinal seal (20, 22) comprising a flat end surface for contact with said annular seal (40, 42), wherein said loop (25) comprises an extended portion (29) extending from said loop (25), an end of said extended portion forming said flat end surface of said longitudinal seal (20, 22).

9. A vacuum pump according to claim 8, wherein said longitudinal seal (20, 22) extends beyond said stator half shells (102, 104) when said longitudinal seal (20, 22) is not under compression, said end surface being aligned with an end surface of said stator half shells (102, 104) during assembly of said vacuum pump.

10. A vacuum pump according to claim 9, wherein a portion of said lateral side of said loop (25) comprising said extended portion (29) is configured to bend towards a centre of said pump in response to said extended portion (29) being aligned with said end surface of said stator.

11. A vacuum pump according to any one of claims 8 to 10, wherein said longitudinal seal comprises biasing means for biasing said end portion of said longitudinal seal towards a centre position of said groove.

12. A vacuum pump according to claim 11, wherein said biasing means comprise deviations in said loop (25) such that said longitudinal seal at said deviations contacts an outer surface of said groove (50), said deviations being arranged symmetrically about a longitudinal axis on opposite sides of said loop (25) and operable to exert opposing biasing forces on said end portion of said longitudinal seal (20, 22).

13. A vacuum pump according to claim 12, wherein said deviations comprise:
a bowing of said opposite sides of said loop (25); or
protrusions on said loop (25).

## Patentansprüche

1. Eine Vakuumpumpe, die Folgendes aufweist:
zwei Halbschalenstatoren (102, 104), die an Längskontaktflächen zusammengefügt sind und eine oder mehrere Pumpkammern (30; 106, 108, 110, 112, 114, 116) definieren;
Längsdichtungen (20, 22) zur Abdichtung zwischen den Längskontaktflächen der beiden Halbschalenstatoren (102, 104) auf beiden Seiten der Pumpkammer (30; 106-116); wobei
die Längsdichtungen (20, 22) in entsprechenden Nuten (50) in mindestens einem der Halbschalenstatoren (102, 104) angebracht sind, wobei die entsprechenden Nuten (50) breiter als die Längsdichtung (20, 22) über mindestens einen Teil der Längsdichtung (20, 22) sind, was eine gewisse laterale Bewegung zulässt, wobei die Längsdichtung (20, 22) eine Vorspanneinrichtung (27) zum Vorspannen mindestens eines Abschnitts der Längsdichtung (20, 22) in Richtung einer Innenfläche der Nut (50), die der Vakuumpumpkammer (30; 106-116) am nächsten liegt, aufweist; und
**dadurch gekennzeichnet, dass**
die Vorspanneinrichtung (27) eine Abweichung (27) der Längsdichtung von einer Achse derselben aufweist, wobei die Abweichung eine Erhebung (27) bildet, die an einer Außenfläche der Nut (50) gegenüber der Innenfläche anliegt; und dass
die Längsdichtung (20, 22) außerdem eine Endschleife (25) mit gekrümmten Seitenarmen aufweist, die eine Bogenform bilden.

2. Vakuumpumpe nach Anspruch 1, bei der die gekrümmten Seitenarme zwei sich nach außen erstreckende Abschnitte auf beiden Seiten der und symmetrisch um die Längsachse aufweisen, wobei die Nut (50) axiale Ausrichtungsflächen (52) zur Anlage an mindestens einem Teil einer Oberfläche der beiden sich nach außen erstreckenden Abschnitte aufweist, wobei die sich nach außen erstreckenden Abschnitte mit den axialen Ausrichtungsflächen (52) wirken, um mindestens einen Teil der Längsdichtung (20, 22) in Richtung einer vorbestimmten axialen Position vorzuspannen.

3. Vakuumpumpe nach Anspruch 2, bei der die Längsdichtung (20, 22) zwei Endschleifen (25) aufweist, die sich nach außen erstreckende Abschnitte in Richtung beider Enden der Dichtung (20, 22) aufweisen, und die Nut (50) entsprechende axiale Ausrichtungsflächen (52) in Richtung beider Enden der Statorhalbschale (102, 104) aufweist, wobei die Längsdichtung (20, 22) innerhalb der Nut (50) so angebracht ist, dass sie zwischen den axialen Ausrichtungsflächen (52) unter Spannung steht.

4. Vakuumpumpe nach Anspruch 2 oder 3, bei der die sich nach außen erstreckenden Abschnitte biegbar sind, um eine axiale Ausdehnung und Kompression der Längsdichtung (20, 22) zu ermöglichen.

5. Vakuumpumpe nach einem der Ansprüche 2 bis 4, bei der ein Querschnitt jedes der sich nach außen erstreckenden Abschnitte im Wesentlichen gleich ist und im Wesentlichen gleich einem Querschnitt von mindestens 90 %eines Längsabschnitts der Längsdichtung (20, 22) ist.

6. Vakuumpumpe nach einem der Ansprüche 2 bis 5, bei der die sich nach außen erstreckenden Abschnitte jeweils Nasen (23) an entsprechenden Positionen aufweisen, die zum Kontakt mit den axialen Ausrichtungsflächen (52) der Nut (50) angeordnet sind.

7. Vakuumpumpe nach einem der Ansprüche 1 bis 6, bei der die Schleife (25) in einer Nut (50) angebracht ist, die zwei sich lateral erstreckende Seiten im Wesentlichen senkrecht zur Längsachse und zwei sich in Längsrichtung erstreckende Seiten im Wesentlichen parallel zur Längsachse aufweist.

8. Vakuumpumpe nach einem der Ansprüche 1 bis 7, wobei die Vakuumpumpe ferner Folgendes aufweist:
Endstücke (122, 124), die an beiden Enden der beiden Halbschalenstatoren (102, 104) angebracht sind;
ringförmige Dichtungen (40, 42) zur Abdichtung zwischen den Endstücken (122, 124) und den Statorhalbschalen (102, 104); wobei
die Längsdichtung (20, 22) sich mindestens bis zu jedem Ende der Statorhalbschalen (102, 104) erstreckt, wobei die Längsdichtung (20, 22) eine flache Endfläche zum Kontakt mit der ringförmigen Dichtung (40, 42) aufweist, wobei die Schleife (25) einen verlängerten Abschnitt (29) aufweist, der sich von der Schleife (25) erstreckt, wobei ein Ende des verlängerten Abschnitts die flache Endfläche der Längsdichtung (20, 22) bildet.

9. Vakuumpumpe nach Anspruch 8, bei der sich die Längsdichtung (20, 22) über die Statorhalbschalen (102, 104) hinaus erstreckt, wenn die Längsdichtung (20, 22) nicht unter Kompression steht, wobei die Endfläche mit einer Endfläche der Statorhalbschalen (102, 104) während der Montage derVakuumpumpe ausgerichtet ist.

10. Vakuumpumpe nach Anspruch 9, bei der ein Abschnitt der lateralen Seite der Schleife (25), der den verlängerten Abschnitt (29) aufweist, dazu konfiguriert ist, sich in Antwort auf eine Ausrichtung des verlängerten Abschnitt (29) mit der Endfläche des Stators in Richtung einer Mitte der Pumpe zu biegen.

11. Vakuumpumpe nach einem der Ansprüche 8 bis 10, bei der die Längsdichtung eine Vorspanneinrichtung zum Vorspannen des Endabschnitts der Längsdichtung in Richtung einer Mittelposition der Nut aufweist.

12. Vakuumpumpe nach Anspruch 11, bei der die Vorspanneinrichtung Abweichungen in der Schleife (25) aufweist, so dass die Längsdichtung an den Abweichungen eine Außenfläche der Nut (50) berührt, wobei die Abweichungen symmetrisch um eine Längsachse auf gegenüberliegenden Seiten der Schleife (25) angeordnet sind und dazu funktionsfähig sind, entgegengesetzte Vorspannkräfte auf den Endabschnitt der Längsdichtung (20, 22) auszuüben.

13. Vakuumpumpe nach Anspruch 12, bei der die Abweichungen Folgendes aufweisen:
eine Durchbiegung der gegenüberliegenden Seiten der Schleife (25) oder
Vorsprünge an der Schleife (25).

## Revendications

1. Pompe à vide comprenant:
deux composants de stators à demi-coquille (102, 104) montés ensemble au niveau de faces de contact longitudinales et définissant une ou plusieurs chambres de pompage (30; 106, 108, 110, 112, 114, 116);
des joints longitudinaux (20, 22) pour assurer l'étanchéité entre lesdites faces de contact longitudinales desdits deux stators à demi-coquille (102, 104) de chaque côté de ladite chambre de pompage (30; 106-116); dans laquelle
lesdits joints longitudinaux (20, 22) sont montés dans des rainures respectives (50) dans au moins l'un desdits stators à demi-coquille (102, 104), lesdites rainures respectives (50) étant plus larges que ledit joint longitudinal (20, 22) sur au moins une partie dudit joint longitudinal (20, 22) ce qui permet un certain mouvement latéral, ledit joint longitudinal (20, 22) comprenant un moyen de sollicitation (27) pour solliciter au moins une partie dudit joint longitudinal (20, 22) vers une surface interne de la rainure (50) la plus proche de ladite chambre de pompage à vide (30; 106-116); et
**caractérisée en ce que**
ledit moyen de sollicitation (27) comprend une déviation (27) du joint longitudinal par rapport à un axe de celui-ci, ladite déviation formant une bosse (27) qui vient en butée contre une surface externe de la rainure (50) opposée à ladite surface interne; et **en ce que**
ledit joint longitudinal (20, 22) comprend en outre une boucle d'extrémité (25) ayant des bras latéraux incurvés qui forment une forme d'arc.

2. Pompe à vide selon la revendication 1, dans laquelle les bras latéraux incurvés comprennent deux parties s'étendant vers l'extérieur de chaque côté de, et symétriquement autour dudit axe longitudinal, ladite rainure (50) comprenant des faces d'alignement axial (52) pour venir en butée avec au moins une partie d'une surface desdites deux parties s'étendant vers l'extérieur, lesdites parties s'étendant vers l'extérieur agissant avec lesdites faces d'alignement axial (52) pour solliciter au moins une partie dudit joint longitudinal (20, 22) vers une position axiale prédéterminée.

3. Pompe à vide selon la revendication 2, dans laquelle ledit joint longitudinal (20, 22) comprend deux boucles d'extrémité (25) comprenant des parties s'étendant vers l'extérieur vers chaque extrémité dudit joint (20, 22), et ladite rainure (50) comprend des faces d'alignement axial correspondantes (52) vers chaque extrémité de ladite demi-coquille de stator (102, 104), ledit joint longitudinal (20, 22) étant monté dans ladite rainure (50) de telle sorte qu'il soit sous tension entre lesdites faces d'alignement axial (52).

4. Pompe à vide selon les revendications 2 ou 3, dans laquelle lesdites parties s'étendant vers l'extérieur sont utilisables pour fléchir afin de permettre une expansion et une compression axiales dudit joint longitudinal (20, 22).

5. Pompe à vide selon l'une quelconque des revendications 2 à 4, dans laquelle une section transversale de chacune desdites parties s'étendant vers l'extérieur est sensiblement la même que chaque autre et sensiblement la même qu'une section transversale d'au moins 90 % d'une partie longitudinale dudit joint longitudinal (20, 22).

6. Pompe à vide selon l'une quelconque des revendications 2 à 5, dans laquelle lesdites parties s'étendant vers l'extérieur comprennent chacune des picots (23) à des positions correspondantes disposés pour entrer en contact avec lesdites faces d'alignement axial (52) de ladite rainure (50).

7. Pompe à vide selon l'une quelconque des revendications 1 à 6, dans laquelle ladite boucle (25) est montée dans une rainure (50) comprenant deux côtés s'étendant latéralement sensiblement perpendiculaires audit axe longitudinal et deux côtés s'étendant longitudinalement sensiblement parallèles audit axe longitudinal.

8. Pompe à vide selon l'une quelconque des revendications 1 à 7, ladite pompe à vide comprenant en outre:
des pièces d'extrémité (122, 124) montées à chaque extrémité desdits deux stators à demi-coquille (102, 104),
des joints annulaires (40, 42) pour assurer l'étanchéité entre lesdites pièces d'extrémité (122, 124) et lesdites demi-coquilles de stator (102, 104); dans laquelle
ledit joint longitudinal (20, 22) s'étend au moins jusqu'à chaque extrémité desdites demi-coquilles de stator (102, 104), ledit joint longitudinal (20, 22) comprenant une surface d'extrémité plate pour le contact avec ledit joint annulaire (40, 42), dans laquelle ladite boucle (25) comprend une partie étendue (29) s'étendant depuis ladite boucle (25), une extrémité de ladite partie étendue formant ladite surface d'extrémité plate dudit joint longitudinal (20, 22).

9. Pompe à vide selon la revendication 8, dans laquelle ledit joint longitudinal (20, 22) s'étend au-delà desdites demi-coquilles de stator (102, 104) lorsque ledit joint longitudinal (20, 22) n'est pas sous compression, ladite surface d'extrémité étant alignée avec une surface d'extrémité desdites demi-coquilles de stator (102, 104) pendant l'assemblage de ladite pompe à vide.

10. Pompe à vide selon la revendication 9, dans laquelle une partie dudit côté latéral de ladite boucle (25) comprenant ladite partie étendue (29) est configurée pour se plier vers un centre de ladite pompe en réponse à l'alignement de ladite partie étendue (29) avec ladite surface d'extrémité dudit stator.

11. Pompe à vide selon l'une quelconque des revendications 8 à 10, dans laquelle ledit joint longitudinal comprend des moyens de sollicitation pour solliciter ladite partie d'extrémité dudit joint longitudinal vers une position centrale de ladite rainure.

12. Pompe à vide selon la revendication 11, dans laquelle lesdits moyens de sollicitation comprennent des déviations dans ladite boucle (25) de telle sorte que ledit joint longitudinal au niveau desdites déviations entre en contact avec une surface externe de ladite rainure (50), lesdites déviations étant disposées symétriquement autour d'un axe longitudinal sur des côtés opposés de ladite boucle (25) et sont utilisables pour exercer des forces de sollicitation opposées sur ladite partie d'extrémité dudit joint longitudinal (20, 22).

13. Pompe à vide selon la revendication 12, dans laquelle lesdites déviations comprennent:
une courbure desdits côtés opposés de ladite boucle (25); ou
des protubérances sur ladite boucle (25).
